Europäisches Patentamt

European Patent Office

Office européen des brevets

(19)

(11) Publication number : **0 501 753 A2**

(12) # EUROPEAN PATENT APPLICATION

(21) Application number : **92301578.8**

(22) Date of filing : **25.02.92**

(51) Int. Cl.⁵ : **G06F 15/419**

(30) Priority : **28.02.91 JP 55543/91**

(43) Date of publication of application :
**02.09.92 Bulletin 92/36**

(84) Designated Contracting States :
**DE FR GB**

(71) Applicant : **International Business Machines
Corporation
Old Orchard Road
Armonk, N.Y. 10504 (US)**

(72) Inventor : **Amano, Tomio
Shatoh Kakinoki 202 goh
1-2-8 Kamiigusa suginami-ku, Tokyo-to (JP)**
Inventor : **Takahashi, Hiroyasu, Kamoshida
Higashi Danchi
7-toh 303goh 533 Kamoshida-cho, Midori-ku
Yokohama-shi, Kanagawa-ken (JP)**

(74) Representative : **Blakemore, Frederick
Norman
IBM United Kingdom Limited Intellectual
Property Department Hursley Park
Winchester Hampshire SO21 2JN (GB)**

(54) **System for and method of generating a data structure.**

(57)   A user describes a tree or a set of trees in a table, and a system generates a data structure corresponding to the tree or the set of trees on memory in accordance with the description. The table has one or more columns in which for each node, attributes given to the node are entered. The system interprets the table ; allocates a memory area to each of the nodes, sets data on the attributes given to the node ; and generates pointer data indicating the connections of the memory areas. The hierarchy of the nodes and the sequence of nodes linked immediately below the same node are determined on the basis of the sequence of rows corresponding to the nodes and levels assigned to the nodes in the table.

FIG. 3

EP 0 501 753 A2

The present invention relates to a system for and a method of generating a data structure corresponding to a tree or a set of trees representing a model for layout understanding or the like.

Electronic filing systems for computer-aided management and retrieval of documents have recently become available for use in offices. Current systems, however, store documents just as pictures. As a scheme for storing information, they have no substantial difference from the conventional paper-based filing. In order to establish an advanced filing system, it is essential to extract contents of a document from a document image.

If a system is intended to function as a database storing the whole contents of documents, coding of the contents of each document is necessary. Even if not, entry of coded information for searching titles, publication names, key words, and so on is indispensable. An optical character recognition (OCR) technique for printed characters is an example of a tool to support such coding operation. However, in order to extract information for retrieval from a document image by OCR, it is essential to know the position where the necessary information is printed. Additionally, the usage of an electronic filing system varies with application. In some cases, coding is required for a portion of a document (for example, abstract of a paper). If an operator should have to specify portions to be recognized, higher efficiency in document entry would not be expected. There is therefore the need for a technology for computer-aided analysis of a document image and automatic understanding of its layout. Layout understanding includes segmenting a document image into regions of characters, illustration, photographs, tables, graphs and so on, and analyzing structures of respective regions. In electronic filing, it is important to interpret character strings as titles, authors, bodies and so on after they are roughly segregated from and other regions such as row segments.

Objects of a document image, in general, have a hierarchical structure based on their IS-PART-OF relationships. For example, a document typically consists of pages, each page consisting of a title, author's name, and body, and the body consisting of some columns. The hierarchical structure is represented by a tree wherein an intermediate node corresponds to one of objects of a document image such as title and so on and a terminal node (leaf) corresponds to a character string.

A document processing method has been proposed whereby a user specifies a tree-structured model as knowledge on the layout and the system performs analysis in accordance with the model, as disclosed by A. Dengel and G. Barth, "High Level Document Analysis Guided by Geometric Aspects," Int. Journal of Pattern Recognition and Artificial Intelligence 2, 4, pp.641-655, 1988.

In a method of generating a data structure corresponding to a tree in memory, it is advantageous from the viewpoint of the users, for a user to describe a tree in a readable form and then for the system to interpret the resultant description so as to generate a data structure in memory. For example, G. Nagy, S. Seth, "Hierarchical Representation of Optically Scanned Documents," Proc. 7th ICPR (Montreal), 347-349, 1984, proposes an attribute grammar for a user to describe the skeleton of a tree and attributes to be given to each node in the tree. However, this forces users into doing a kind of programming and is not appropriate for end users to describe a model.

Since there are various types of layout corresponding to various kinds of documents, it is impossible to prepare models for all types of layout beforehand, and end users are therefore required to describe and modify models. Therefore, easy description and modification of models is an important factor of a system for document image analysis for layout understanding. This requirement of easy description must be attained while maintaining sufficient representation capability to permit a user to cope with various types of layout. The foregoing method of describing of a tree according to an attribute grammar does not satisfy the requirement.

In order for a user to describe a tree, not limited to a layout model, in an understandable form a graphics editor is generally used for editing a chart representing a tree on a display. However, computers available for graphics editors are limited. In addition, although graphics editors are suitable for use in describing the skeleton of a tree, that is, the hierarchy of nodes and the sequence of child nodes linked to a particular node, they are not suitable for use in describing attributes given to respective nodes.

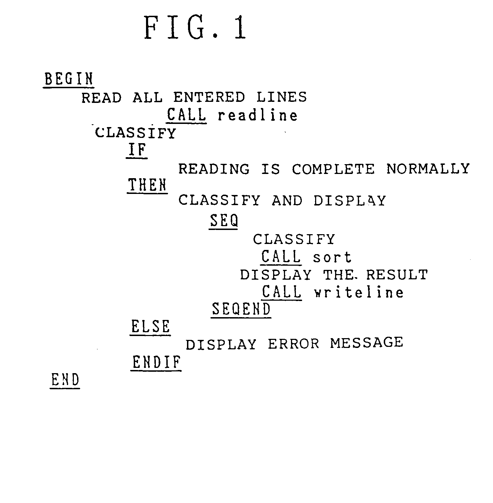

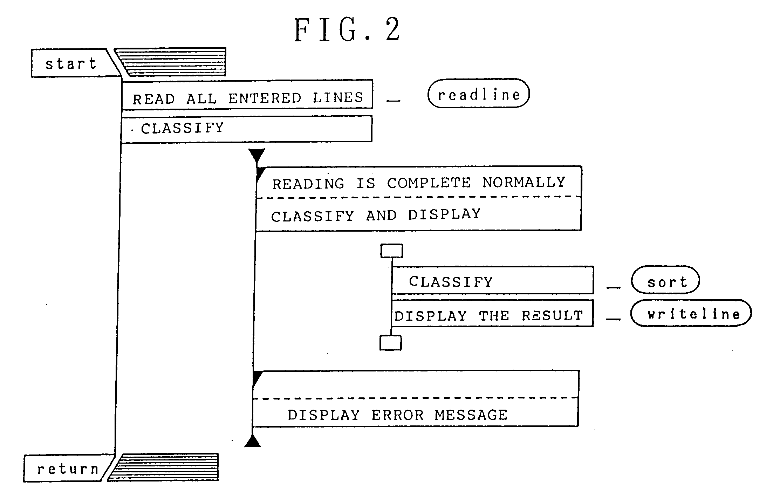

JA PUPA 2-59818 discloses a system for drawing tree-structure charts representing tree structures of program modules. It permits entry of information for drawing a tree-structure chart through a terminal which is not supporting graphics functions. Since call relationships among modules constitute a tree structure with a main program as its root, this drawing system is a kind of tree generating system. With this system, a user describes information on call relationships among modules by using a text editor. Figure 1 shows an example of how the information on a tree-structure chart is described. Branching of the tree is indicated by key words such as IF, THEN, ELSE and so on in the text. The system interprets the text including these key words, and generates a tree-structure chart as shown in Figure 2.

However, since a special key word is assigned for each branching of a tree, end users are required to understand the meaning of the key words and get skilled in their usage. Such description method is familiar to programmers, but it is not appropriate for end users. It would take much time for end users new to a key board to enter key words, and they would possibly make spelling and grammatical errors. In addition, if a complicated tree consisting of a number of hierarchy levels is expressed with this description method, then the resultant description will be complicated, and the entire hierarchical structure of the tree will be difficult to understand from the resultant description.

Moreover, the problem shared by the foregoing description methods is that they can express only one specific tree, that is, they cannot express a set of trees. Expression of a set of trees is desirable for some applications. Consider the first page of a paper, for example. The existence of objects such as titles and authors is mandatory, but that of footnotes is not. Also, a paper generally containing two columns on each page may contain only one column on the last page. To cope with such variations, conventional methods such as those hereinbefore described require the description to be made separately for a tree with a footnode and a tree without it, and for a tree containing one column node and a tree containing two column nodes. Therefore, such conventional methods place a heavy burden on users.

In accordance with the present invention, there is now provided a method for generating a data structure corresponding to a tree or a set of trees in a memory of a computer system, the method comprising:

(a) entering attributes corresponding to nodes of said tree or said set of trees into one or more columns of a table; and

(b) interpreting the table, thereby allocating a memory area to each of the nodes, setting data on the attributes given thereto, and generating pointer data indicating connections between such memory areas.

This advantageously permits a user to describe a tree more easily, and further enables generation of a table structure representing the tree in memory based on the description.

Viewing a second aspect of the patent invention, there is provided a system for generating a data structure corresponding to a tree on memory, comprising means for interpreting a table with one or more columns where for each of nodes contained in said tree attributes given thereto are entered, thereby allocating a memory area to each of said nodes, setting data on the attributes given thereto, and generating pointer data indicating the connections of such memory areas.

Because the description is entered by the user in a tabular form, the data structure representing the tree in memory can be more easily followed and then understood.

Viewing a third aspect of the present invention, there is provided a system for generating a data structure corresponding to a tree on memory, comprising:

(a) means for inputting data;

(b) means for displaying a table for describing attributes to each of nodes contained in said tree;

(c) means for editing said table on the basis of the data received from said means (a);

(d) means for interpreting the edited table, thereby allocating a memory area to each of nodes contained therein, setting data on the attributes given thereto, and generating pointer data indicating the connections of such memory areas.

The description may thus advantageously be entered using a text editor to edit the table.

Viewing a fourth aspect of the present invention, there is provided a system for generating a data structure corresponding to a tree or a set of trees on memory, comprising:

(a) means for inputting data;

(b) means for displaying a table for entering attributes given to each of node kinds contained in said tree or set of trees;

(c) means for editing said table on the basis of the data received from said means (a); and

(d) means for interpreting the edited table, thereby allocating a memory area to each of node kinds contained therein, setting data on the attributes given thereto, and generating pointer data indicating the connections of such memory areas.

The tabular form of the description advantageously permits a set of trees to be described and a data structure representing the set of trees to be generated based on the description.

Viewing a fifth aspect of the present invention, there is provided a system for generating a data structure corresponding to a tree or a set of trees on memory, comprising means for interpreting a table with one or more columns where for each of node kinds contained in said tree or set of trees attributes given thereto are entered, thereby allocating a memory area to each of said node kinds, setting data on the attributes given thereto, and generating pointer data indicating the connections of such memory areas.

Viewing a sixth aspect of the present invention, there is provided a method for generating a data structure corresponding to a tree on memory in a computer system with data entry means and a memory, comprising the steps of:

(a) displaying a table for entering an attribute given to each of nodes contained said tree;

(b) editing said table on the basis of the data received from said data entry means; and

(c) interpreting the edited table, thereby allocating a memory area to each of said nodes contained therein, setting data on the attribute given to said node, and generating pointer data indicating the connections of

3

such memory areas.

It will be appreciated, therefore, that the present invention extends to a method for generating a data structure corresponding to a tree or a set of trees on memory in a computer system with data entry means and a memory comprising the steps of:

(a) displaying a table for entering an attribute given to each of said node kinds contained in said trees or said set of trees; and

(b) editing said table on the basis of the data received from said data entry means; and

(c) interpreting the edited table, thereby allocating a memory area to each of said node kinds contained therein, setting data on the attribute given thereto, and generating pointer data indicating the connections of such memory areas.

Furthermore, it will be appreciated that the present invention contemplates the method according to claim 16 or 18 wherein said table includes a column for entering the level of each of said nodes in said tree.

It will also be appreciated that the present invention extends to a system for generating a data structure corresponding to a tree on memory, comprising means for interpreting a table with one or more columns where for each of entities attributes given thereto are entered, thereby allocating a memory area to each of said entities, setting data on the attributes given thereto, and generating pointer data indicating the connections of such memory areas.

Still furthermore, it will be appreciated that the present invention extends to a method for generating a data structure corresponding to a tree on memory, comprising the steps of editing a table with one or more columns where for each of entities attributes given thereto are entered, interpreting said table, thereby allocating a memory area to each of said entities, setting data on the attributes given thereto, and generating pointer data indicating the connections of such memory areas.

When the system is used to describe a tree or a set of trees, it is sufficient for a user to enter attributes for each of node kinds in a table by using an editor. A text editor may be used for this purpose.

If the table includes a column for entering the level of each of node kinds in the tree or set of trees, the table interpreter means can determine the hierarchy of node kinds and the sequence of node kinds linked immediately below the same node kind on the basis of the sequence of rows describing the attributes given to the node kinds and the levels assigned to them, thereby generating pointer data in accordance with the determination.

The table may include a column for entering names of the node kinds. Also, the table may include a column for entering the number of nodes belonging to the respective node kinds. In this case, the table interpreter means treats the data on the number as attribute data, and sets them in a memory area allocated to the node kind.

It is also possible to store the prepared table in an external storage unit as module. To facilitate the creation of a table, there is provided means for determining the presence or absence of an insufficient entry in a main table and combining a sub-table and the main table to create a single complete table if such an insufficient entry is found.

A preferred embodiment of the present invention will now be described, by way of example only, with reference to the accompanying drawings, in which:

Figure 1 is a diagram showing an example of the description of a tree structure by a conventional technique;

Figure 2 is a diagram showing a resultant output of a tree-structure chart by a conventional technique;

Figure 3 is a diagram showing an outline of an example of a tree generating system according to the invention;

Figure 4 is a diagram schematically showing an example of a tree;

Figure 5 is a diagram showing a table for describing the tree shown in Figure 4;

Figure 6 is a diagram schematically showing another example of tree;

Figure 7 is a diagram showing a table for describing a sub-tree;

Figure 8 is a diagram showing a table for describing a main tree;

Figure 9 is a diagram showing a table for describing a layout model;

Figure 10 is a diagram showing the front page of a paper;

Figure 11 is a diagram showing a table for describing a layout model of the front page of the paper shown in Figure 10;

Figure 12 is a diagram showing two tables for describing a layout model of the front page of the paper shown in Figure 10;

Figure 13 is an explanatory diagram of a process for generating a data structure in accordance with the table of Figure 11;

Figure 14 is an explanatory diagram of a process for generating the data structure in accordance with the table of Figure 11;

4

Figure 15 is an explanatory diagram of a process for generating the data structure in accordance with the table of Figure 11;

Figure 16 is an explanatory diagram of a process for generating the data structure in accordance with the table of Figure 11;

Figure 17 is an explanatory diagram of a process for generating the data structure in accordance with the table of Figure 11;

Figure 18 is a diagram showing an example of management of pointer data;

Figure 19 is a diagram showing another example of management of pointer data; and

Figure 20 is a diagram showing still another example of management of pointer data.

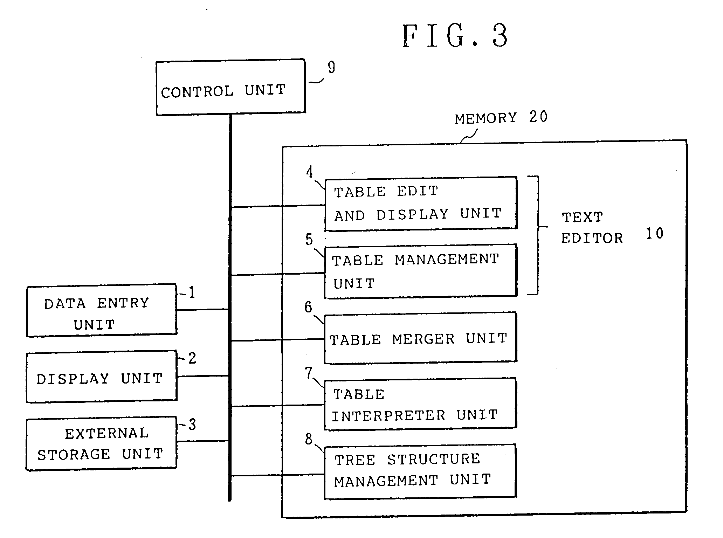

Figure 3 shows a hardware construction for an embodiment of the invention. The tree generating system comprises a data entry unit 1 such as a key board, display unit 2 such as a CRT display, external storage unit 3 comprising a storage medium such as a magnetic disk, optical disk or the like, table edit and display unit 4 for editing and displaying a table, table management unit 5 for storing and managing the table data, edited by the table edit and display unit 4, in the external storage unit 3, table merger unit 6 for merging a plurality of tables into a single table, table interpreter unit 7 for interpreting the table, thereby allocating an area on memory 20 to each node or node kind, setting data on attributes given to each of node or node kind in the area, and generating pointer data indicating the connections of such areas, tree structure management unit 8 for storing and managing the tree structure data generated by the table interpreter unit 7, and control unit 9 for performing general control over these units. Specifically, a text editor 10 implements the table edit and display unit 4 and the table management unit 5. It will be appreciated that units 4 to 8 may be in the form of dedicated hardware devices. However, in the example shown in Figure 3, they are in the form of software modules loaded in the memory 20.

In accordance with the present invention, a tree is defined by entries in a table.

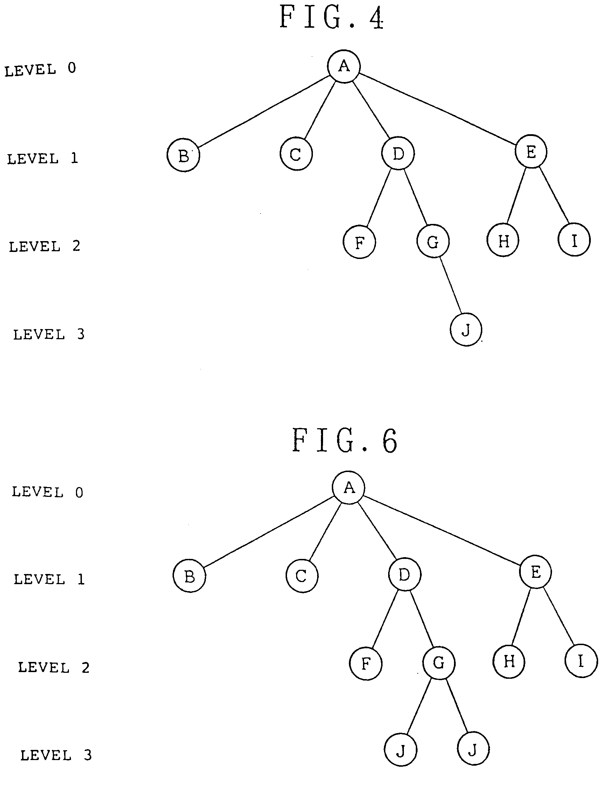

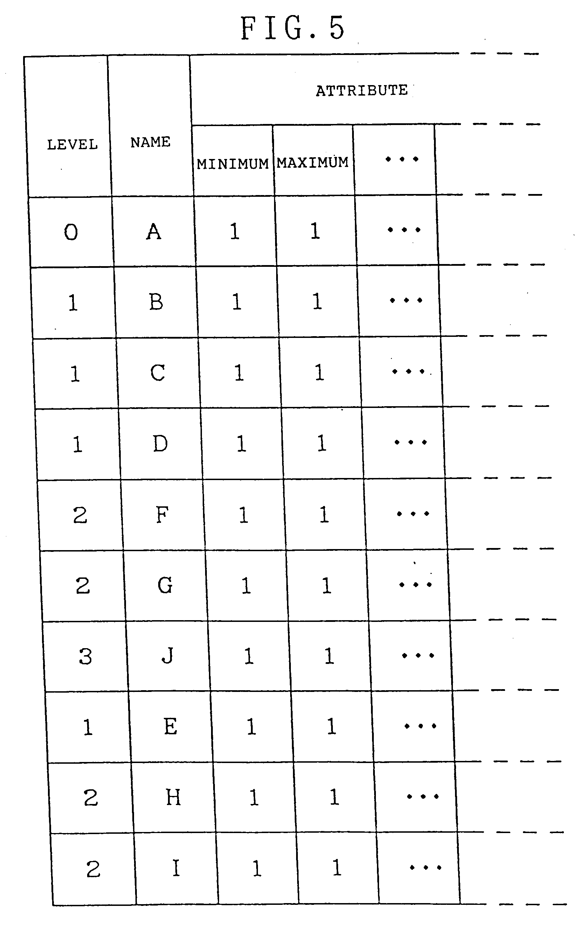

Figure 4 shows a description of a tree containing eleven kinds of nodes from 'A' to 'J', with one node for each kind. According to the present invention, it is sufficient for a user to enter the corresponding table shown in Figure 5 through the data entry unit 1 while using the text editor 10. The table includes a column for entering names of nodes or node kinds and a plurality of columns for entering their attributes. For facilitating the table creation, it is preferable to store a blank table in the external storage unit 3 beforehand so as to fetch it for editing. A completed table is stored in the external storage unit 3.

The skeleton of a tree is represented in the table shown in Figure 5 in a following way: First, the table is provided with a level column for entering levels (depths). For example, numeral '0' is entered in the level column for 'A' located on the top of the tree, and numeral '1' is entered in the level columns for 'B', 'C', 'D', and 'E' which are children of 'A'.

Next explanation is provided for the links among ancestors and descendants. The fact that a descendant node is linked directly or indirectly to an ancestor node is defined in the table by the fact that the row for the descendant node is found between rows containing the ancestor node and another node which is equal or higher in level than the ancestor node and appears first below the row containing the ancestor node. If such a node appears below the row containing the ancestor node, every row below the ancestor node row defines a node as a descendant of the ancestor.

If the sequence exists among children of a parent, it is reflected to the sequence of rows in the table. For example, assume that the sequence exists among the nodes in level 1 and that they are accordingly arranged in the order of 'B', 'C', 'D', and 'E' from the left in Figure 4. (Note that the node sequence may actually correspond to the sequence in the vertical direction of physical positions of entities corresponding to the nodes.) Then, their corresponding rows are arranged in the order of 'B', 'C', 'D', and 'E' vertically.

According to such rules, the hierarchy of nodes (or node kinds) contained in a tree and the sequence of nodes (or node kinds) with the same parent can be expressed by using up-and-down relationships of rows and the level column entries in the able. Therefore, when the table shown in Figure 5 is interpreted in accordance with the rules, it is recognized that 'A' is located on the top of the tree, because 'A' is described in the name column at the uppermost row of the table. In addition, with reference to the name column at rows with '1' entered in the level column, it is recognized that 'A' has children 'B', 'C', 'D', and 'E'. The sequence of rows for the children defines it is possible that they are arranged in the order of 'B', 'C', 'D', and 'E'.

Further, 'F' and 'G' whose levels are 2 and are whose rows are found between the rows for 'D' and 'E' of level 1 are children of 'D'. 'J' whose level is 3 and whose row is following to the row for 'G' is a child of 'G'. At the bottom of the table, rows for 'H' and 'I' of level 2 follow the row for 'E' of level 1. It is therefore recognized that 'H' and 'I' are children of 'E'. The table interpreter unit 7 performs such interpretation to generate pointer data.

As shown in Figure 5, columns for entering attributes in the table include columns for node numbers, each consisting of a sub-column for entering a minimum value and that for entering a maximum value. The number of nodes of a particular node kind may be described by using the row for that node kind. In this embodiment, however, the number of child nodes are described in the row for their parent. (This rule presupposes that the number of root node is 1.) The row for 'A', for example, in the table shown in Figure 5 described under this rule indicates that the tree represented by the table has one node for each of node kinds 'B', 'C', 'D', and 'E' as children of node 'A', because the entered minimum and maximum values are '1'. In short, the table shown in Figure 5 represents a single tree.

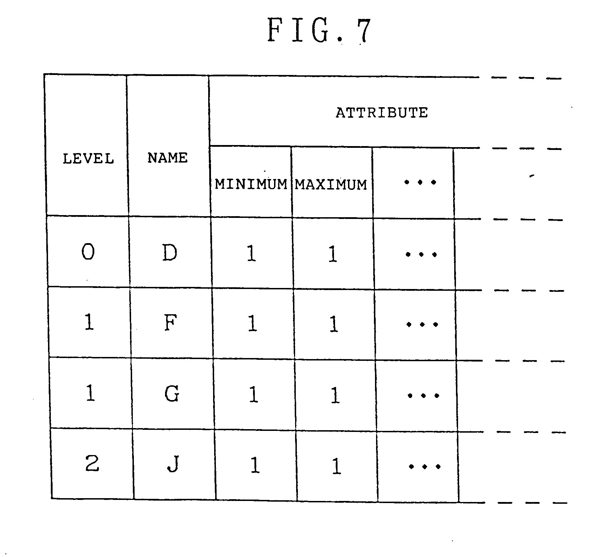

The minimum value is '1' and the maximum value '2' in the row for 'G' mean that the table corresponds to a set of trees whose members are a tree with one node of the kind 'J' contained and a tree with two such nodes contained (see Figure 6). Note, however, that a data structure obtained by converting such table has only one memory area for the node kind 'J'. Minimum and maximum values of the child nodes ('J') are set in the area allocated to the kind 'G' as its attribute.

If it is required to indicate that a terminal node such as 'J' has any successor and its number is indefinite, appropriately predetermined numbers are entered as minimum and maximum values at the row for the terminal node. In an example of the layout model referred to later, successors of a terminal node correspond to character strings.

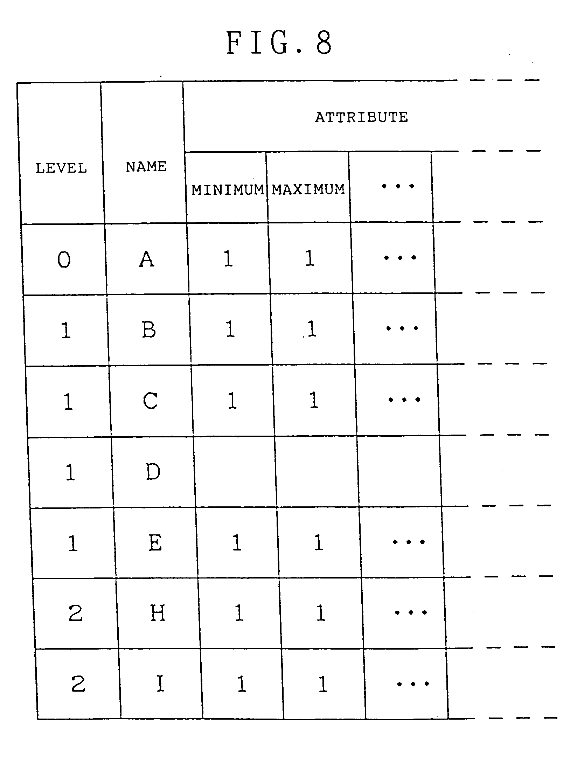

The table merger unit 6 determines whether a table fetched from the external storage unit 3 should be combined with another able or not. If the fetched table should be so, the unit 6 looks for a table to be combined therewith, and merges the tables into one. By using this unit, it is permitted to quote the description of a different table. Therefore, if a user wants to define a complicated tree and if the external storage unit 3 stores a table defining part of the tree, the stored table may be utilized as a module. For example, assume that the sub-tree with 'D' as its root in the tree shown in Figure 4 is defined by the table (sub-table) shown in Figure 7 and stored in the external storage unit 3. Then, in order to define the tree shown in Figure 4, it is sufficient for a user to create the table (main table) shown in Figure 8, which is easier to describe than that shown in Figure 5. In the table shown in Figure 8, the row for 'D' is blank except in its level column and name column, which indicates that 'D' is the root of a sub-tree defined by a different table. For example, when the table shown in Figure 8 is fetched from the external storage unit 3, the table merger unit 6 has access to the external storage unit 3 to find the table shown in Figure 7, and merges them to create the table shown in Figure 5. Operation of the table merger unit 6 is explained later in more detail.

A layout model for a document image will now be explained as a specific example of the representation of a tree structure by using a table. Considering the document objects constituting of character strings, direct successor objects constituting a particular object always have the sequence, in which persons read a text. The sequence is determined by spatial relationships of the successors on a page, from top to bottom in case of vertical arrangement or from left to right in case of horizontal arrangement. For example, the body on a page of a U.S. patent gazette includes two columns as its successors, and they are arranged horizontally. If it can be distinguished whether two successive objects defined in a table are in different level, that is, in a predecessor-successor relationship, or they belong to the same level, objects on a page forming a tree structure can be represented in the form of a one-dimensional sequence of the descriptions for the objects. Such distinction is achieved by giving, for example, a numeral indicating the level of the hierarchy to each object. With such improvement of the description method, a layout model can be expressed in the form of a table in which object names are arranged vertically and attributes for objects are described in the respective rows.

In a system for layout analysis disclosed in Amano et al., "Document Image Recognition System DRS for Entry of Multimedia Document," Information Processing Society of Japan, Special Interest Group of Multimedia Communication and Distributed Processing 48-6, January 1991, the information to be specified for a model in accordance with the aforementioned approach is as indicated below. (Hereinbelow, character strings are also regarded as objects.

1) Limitation on the number of direct successors (minimum and maximum values).
2) If a plurality of successors exist, the direction of their arrangement (vertical or horizontal).
3) Is the existence of the objects in the model mandatory or not?
4) Is there any field separator (a white pixel region, or a horizontal or vertical segment large enough to be a boundary between objects) on the left, right, top or bottom of the object?
5) Sort of characters constituting character strings (numerals, alphabetical letters, Kanji).
6) Is character recognition performed later?
7) Is post-processing done after character recognition?

Attributes as to a set of successors, such items as 1) and 2), are described in the row for their direct predecessor object as its attribute. Items 3) and the following for an object are described in the row for itself.

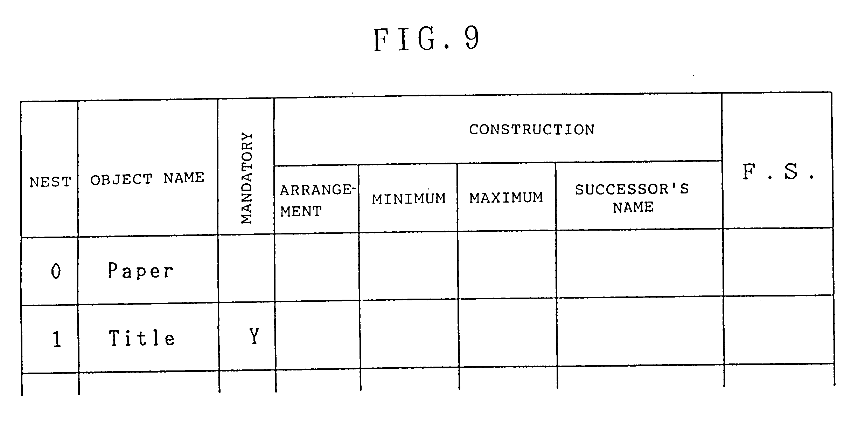

While the explanation is made for items 1) to 4), items 5) and the following can be described easily by adding columns for entering such attributes. A table for describing a model is shown in Figure 9 Respective columns have the following definitions:

1) Nest

A number indicating a hierarchical level. An object in the top level of the tree is given by '0'. The larger the number, the deeper (farther from the root) the object.

2) Object Name

A character string expressing the name of an object. If the object is not referred to by another object, it may be blank.

3) Mandatory

This indicates whether a particular object necessarily exists on a page or not. 'Y' indicates it necessarily exists, and 'N' indicates it does not.

4) Construction

This indicates how an object in constructed. It consists of four sub-columns. If all sub-columns are blank, it means that the object is defined by another table.

4-1) Arrangement

This indicates a direction of arrangement of direct successors, with V for vertical arrangement and H for horizontal arrangement. Expansion to describe the information on pitches and so on is possible.

4-2, 3) Minimum and maximum

It is possible that the same successor recurs. These two sub-columns specify the minimum and maximum values of the occurrence. If an object never recurs, '1' is specified for both.

4-4) Successor's Name

This specifies the name of a direct successor included in a particular object. If the successor is a character string, a reserved word Ch_String is entered. If it is blank, it means that a child object is defined by the immediately subsequent row.

5) F.S

This indicates the position where a field separator exists around a particular object. For example, LW (Left White), LB (Left Black), RW (Right White), RB (Right Black), AW (Above White), AB (Above Black), BW (Below White), BB (Below Black), blank (no field separator), or the like is described.

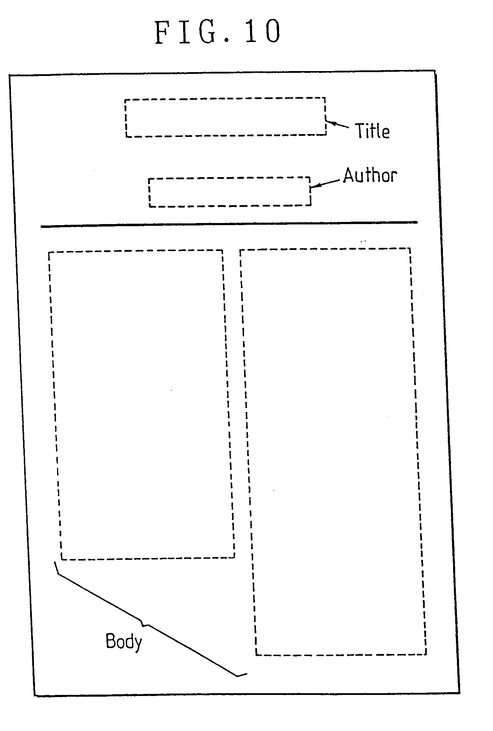

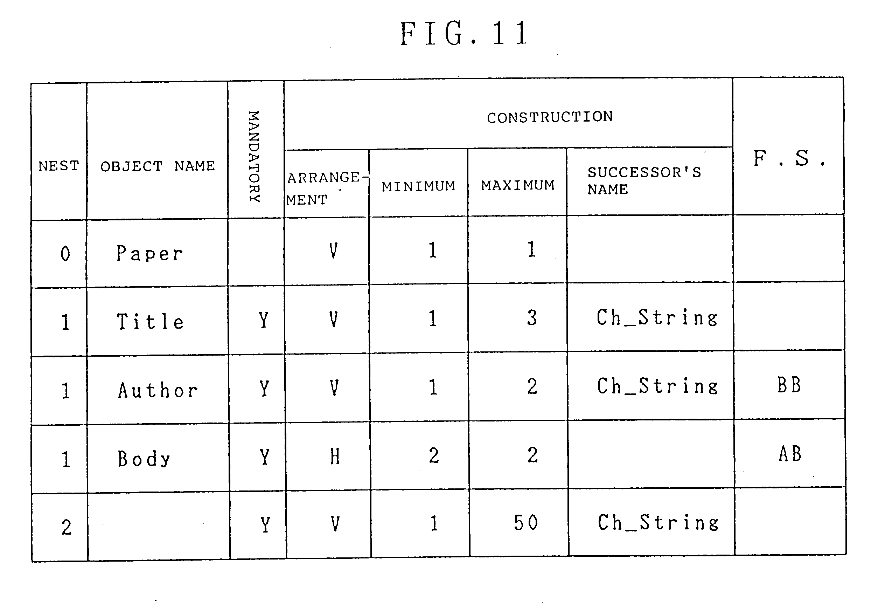

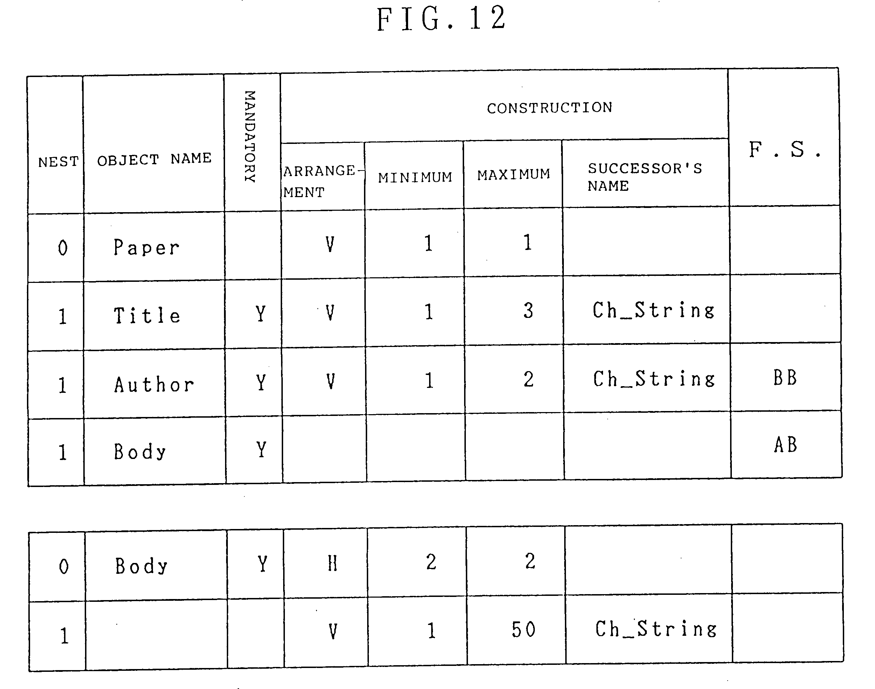

Figure 11 shows a table actually describing the front page of a paper as shown in Figure 10. The table shown in Figure 11 defines the "Paper" object consisting of one "Title", one "Author", and one "Body" which are vertically successive. The "Title" consists of one to three vertically character strings. The "Author" consists of one or two vertically successive character strings. The "Body" consists of two horizontally successive objects without name (corresponding to columns). The object without name consists of one to fifty vertically successive character strings. A field separator in the form of a horizontal segment exists between "Author" and "Body". As shown in Figure 12, the construction of the object "Body" may be defined by a different table.

What will now be explained is how a data structure representing a tree or a set of trees is generated on memory in accordance with the table describing the layout model of the front page of a paper.

a. Merger of Tables

As explained above, since some tables require a supplementary description from a different table, the table merger unit 6 performs necessary preprocessing prior to the generation of a data structure in memory. The table merger unit 6 executes the following operation:

1) It searches rows of an entered table (main table) sequentially from the top, for a row (i) that was its column for successor's name is blank but (ii) for which the Nest number of the subsequent row is not larger than

7

its own Nest number (or (ii') the table ends there).

2) When such a row (hereunder called a blank row) has been found, the unit accesses the external storage unit 3 to fetch a table (sub-table) whose column names are the same as those of the main table and the entry of the object name column on the top row are the same as that of the blank row. It then supplements an insufficient description in the blank row with the description on the top row of the sub-table, and inserts the second and the following rows of the sub-table under the supplemented row. At this time, the sum of the Nest numbers defined by a row of the sub-table and by the blank row in the main table is entered in the column for Nest number in a corresponding row inserted.

3) The foregoing steps are iterated until the end of the main table. The same steps are also executed for newly inserted portions.

In short, the table merger unit 6 outputs the entered table unchanged if no blank row exists, while it outputs a new merged table if any blank row exists. The new table may be stored in the external storage unit 3.

b. Generation of a Data Structure

The table output from the table merger unit 6 is sent to the table interpreter unit 7. The table interpreter unit 7 prepares a global variable "int Line" indicating the row currently being processed setting its initial value as Line = 1 (indicating the first row). After this, the unit 7 recursively calls a program GenTree whose pseudo codes are shown below, thereby growing the tree starting from the root.

```
GenTree (pointer to a node Parent Node)

 {.

/* expression of a local variable */

int Nest;

pointer to a node CurrentNode;

if (if Line is 1) {

    Generate a node for the root, and set the attributes.

    Current Node = address of the root node

} else {

    Generated a node, and set the attributes.

    Current Node = address of the node

    Connect Current Node as a child node to

    ParentNode by a pointer.

}

Nest = the row number indicated by Line.

do while (the table is continued, and Nest number of row

        Line +1 > Nest) {

        Increment Line.

        call GenTree (Current Node);

        .
      } }
```

When the program is applied to the table shown in Figure 11, the tree grows in a following way:

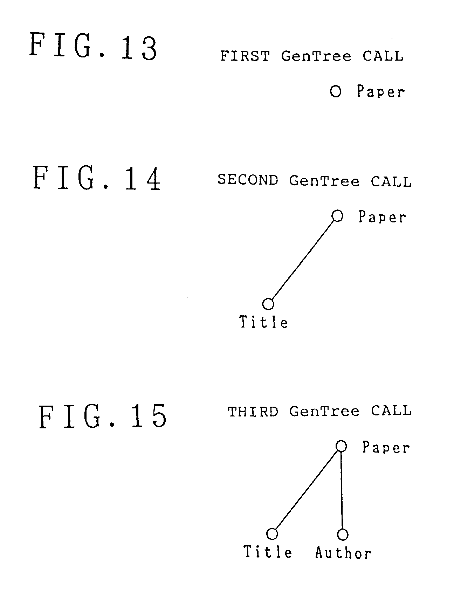

1) First, GenTree (NULL) is called with Line = 1. Since Line is 1, a root node ('Paper') of the tree is generated on memory (Figure 13). Note here that a memory area assigned to a node included in a tree or a set of trees is also called a node. Attribute data for 'Paper' is set in the memory area ('Paper' node) assigned to 'Paper'. Since the primary significance of an object name lies in distinction of nodes when a user describes a tree structure, the name need not be set in the memory area for the object in some applications.

In response to the first call, 0 is set as the variable Nest. Since the Nest number of the next row is 1, the condition for iteration is met. Accordingly, GenTree is recursively called after Line is incremented to 2.

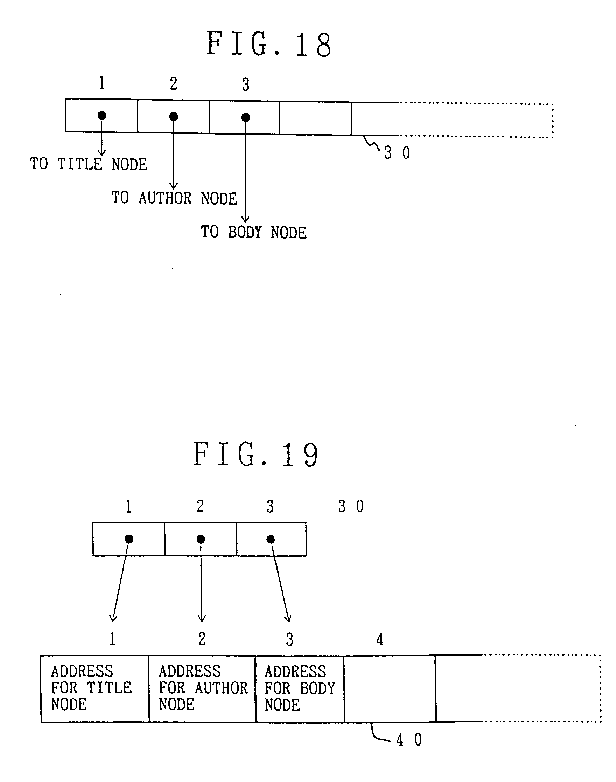

2) GenTree, called for the second time under the condition that Line equals 2, processes on the second row of the table. A memory area is assigned to a child ('Title'), and connected to the area of the parent ('Paper') by the pointer (Figure 14). Specifically, as shown in Figure 18, an array 30 for storing pointer data to a child node is generated inside or outside the 'Paper' node on memory, and address data to the 'Title' node is set in the array 30. The address data to be set in the array 30 may be a memory address; however, it may be an index for another array 40 as shown in Figure 19. In the latter case, memory addresses are stored in the array 40. This scheme is convenient in that a tree structure generated on memory can be stored in the external storage unit 3 in the form of a file, the address data to be rewritten at the tie of loading being gathered in the array 40. Pointer data can be managed in various manners as explained in this paragraph.

In response to a second call, 1 is set as the variable Nest. Since the nest number of the next row is also 1, the condition for iteration is not met, and the control therefore returns to the caller immediately.

3) GenTree is called for the third row in the loop of GenTree called at first, and a node corresponding to 'Author' is created on memory in the same manner as 2). In order to indicate 'Author' as a child of 'Paper', the 'Paper' node and the 'Author' node on memory are connected by a pointer (Figure 15).

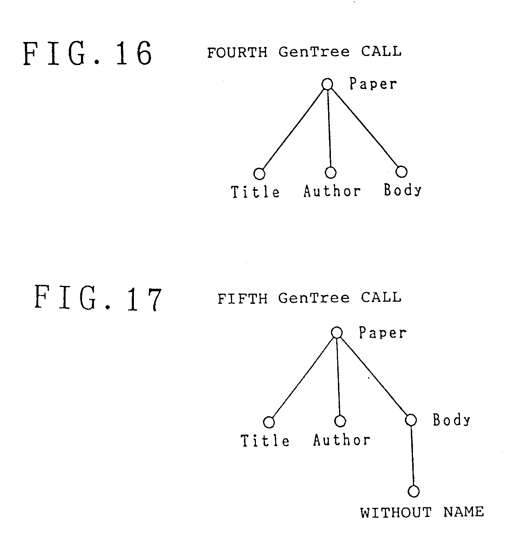

4) In response to the fourth call, the fourth row is processed in the same way, and a node corresponding to 'Body' is created on memory. In order to indicate 'Body' as a child of 'Paper', the 'Paper' node and the 'Body' node on memory are connected by a pointer. In this case, the condition for iteration is met, and GenTree is therefore called again (Figure 16).

5) In the processing by GenTree called for the fifth time, a parent node given by the argument becomes the node corresponding to 'Body'. The node newly created on memory (without name) is connected to the 'Body' node by a pointer to indicate that the object without name is a child of 'Body' (Figure 17).

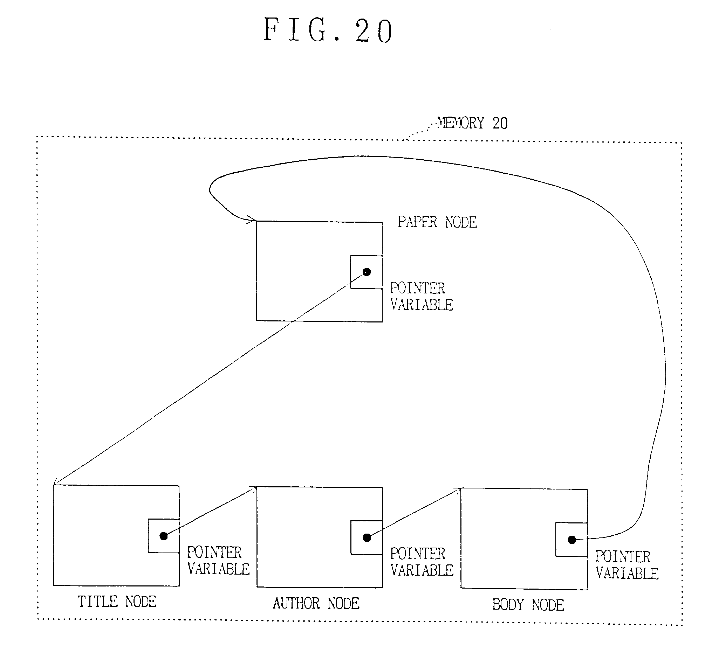

Methods for managing information on the sequence of children having the same parent are as follows: One of them, shown in Figure 18 or 19, is that indices in an array storing pointer data from the parent node to child nodes are arranged in order of the sequence. Another, shown in Figure 20, is that a parent node has pointer data to the head of the child nodes. The following child nodes have pointer data to subsequent child nodes, respectively, except that the tail child node has pointer data to the parent node. Since both methods are known to those skilled in the art, detailed explanation how they are implemented is omitted.

Tree-structure data generated as explained above is stored in the external storage unit 3 in the form of a file. By doing so, the tree structure can be restored immediately on memory by loading it again from the file. However, the renewal of pointer the data based on memory addresses of the areas newly assigned to respective nodes is necessary.

In accordance with the present invention, all that a user has to do for generating a data structure for a tree or a set of trees in memory is to create a table which includes rows describing attributes of node kinds and arranged in a sequence. A user can also divide a tree into some parts and describe a model using multiple tables. This technique has the following advantages:

1) Description of the information on attributes to be set in respective nodes in memory is easy.

In some applications, it is required to describe not only the skeleton of a tree but also the information on various attributes that nodes in memory have. For example, in a layout model, respective nodes have various attributes such as the presence or absence of a field separator, the necessity of the character recognition and the post-processing, and so on. In the embodiment of the present invention hereinbefore described, columns for attributes are provided in a table so that the information on attributes given to a node can be easily described by filling in a row for the node. In contrast, the method disclosed in JA PUPA 2-589818 must use a complicated grammar to support such a description method.

2) Description of a tree using a table makes it easy to understand the resultant description.

First, the comparison of attribute values entered in a table is easy. In addition, the skeleton of a tree is fairly understandable because the hierarchy of nodes constituting the tree and the sequence of child nodes linked to a particular node are expressed by the sequence of node names in the name column and the levels (depths in the tree) of them indicated in the nest column.

In describing a layout model conventionally, if the information on the iteration that plural objects of the same kind form a predecessor or parent object is described by a grammar, the recursive description is necessary, which makes the resultant description difficult for users to understand without learning knowledge. In contrast, according to the present invention, the iteration can be described easily by expressing relations among successors as attributes of their predecessor.

3) Modularization is expedited by representing trees in the form of tables and accumulating them.

Let a layout model be chosen as an example for explanation. It is rare that a model of a document to be newly entered is completely different from existing models. Usually, it is similar to either an existing model at least in part. A user naturally wants to create a new model by modifying or combining usable parts of existing models. To do so, the embodiment of the present invention hereinbefore described permits a user to look for and choose tables representing similar layout models stored in the external storage unit 3. The search operation may be performed by displaying tables on the display unit 2 or printing out tables by a printer (not shown). In either way, since skeletons of layout models and attributes for respective objects are fairly understandable from tables for the reasons stated in 1), the tables are easily compared. If desired, a search function using node names and attribute names as keys may be added. Such function will be implemented easily by those skilled in the art. When a similar table is found, desired tree-structure data are obtained by modifying the table in accordance with the layout of a document which the user wants to enter and then converting it into the tree-structure data by using the tree-structure generator unit 7. Alternatively, a new table can also be created by merging usable parts of two or more tables.

4) A tree can be described by using a text editor.

Since names and attributes of respective nodes may be described in a table as one-dimensional succession of rows, an editor dedicated to for handling tree structures is not required. In addition, if respective column items of tables are defined appropriately, the amount of the information to be entered by a user through a key board to describe a tree structure is minimized. Further, the accumulated data can be modified easily, as set forth in 2). On the contrary, with a conventional description method requiring a special editor, such operation is relatively difficult. It is also difficult to implement the function for finding a similar table.

5) A set of trees can be expressed.

As described above, conventional methods can express only one specific tree structure. In layout analysis based on a layout model, description of a set of trees is necessary to cope with variations in the object number. Conventional techniques, which merely support the description of individual trees, are dissatisfactory in this respect. In contrast, the present invention supports attributes indicating whether the existence of a node of a kind is mandatory or not, attributes indicating information on the number of child nodes, and so on, thereby making it possible to describe not only a single tree but also a set of trees belonging to a particular class (representing the layout structure of, for example, the front page of a paper).

Thus a method according to the present invention has significantly powerful expression capability as compared to conventional techniques.

It will now be appreciated that the following variations are possible, in addition to those already suggested in connection with embodiments of the present invention.

First, any symbols other than numerals may be entered in the level or nest column of the table, because it is sufficient to distinguish level differences of node or node kinds in a tree.

When existing tables are used, it is possible to skip the table merger process and generate a single data structure directly from plural data structures corresponding to respective tables. In this case, the tree structure generator unit 7 generates a main tree on memory from a main table and add one or more sub-trees to it.

Further, the invention can be applied to fields other than layout understanding. In applications based on the knowledge given beforehand, data on such knowledge in general has the form of tree structures. The invention is widely applicable to entry of such knowledge. As to the description of a layout model, the column for describing the number of nodes is provided in the table to express a set of tree structures, as stated above. However, for applications merely requiring the description of individual trees, such column need not be provided.

**Claims**

1. A method for generating a data structure corresponding to a tree or a set of trees in a memory of a computer system, the method comprising:

    (a) entering attributes corresponding to nodes of said tree or said set of trees into one or more columns of a table; and

    (b) interpreting the table, thereby allocating a memory area to each of the nodes, setting data on the attributes given thereto, and generating pointer data indicating connections between such memory areas.

2. A method as claimed in claim 1, comprising:

    (a) displaying a table for entering an attribute given to each of said nodes contained in the tree or said set of trees; and

    (b) editing the table on the basis of the data received from data entry means.

3. A method as claimed in claim 1 or claim 2 wherein the table includes a column for entering the level of each of the nodess in the tree or set of trees.

4. A method as claimed in claim 1 wherein the table interpretation step determines the hierarchy of the nodes and the sequence of nodes linked immediately below the same node on the basis of the sequence of rows describing the attributes given to the nodes and the levels assigned to the nodes in the table, and generates pointer data in accordance with the determination.

5. A method as claimed in claim 1 or claim 2 wherein the table includes a column for entering the number of nodes belonging to each of the node kinds.

6. A method as claimed in claim 5 wherein the column for describing numbers of nodes includes a column for entering a maximum value and a column for describing a minimum value.

7. A method as claimed in claim 5 wherein the number of child nodes is described in the row containing their parent node.

8. A method as claimed in claim 1 or claim 2, wherein the table includes a column where, for each of the nodes it is described whether it is mandatory or not that such a node exists in every tree that is a member of the set.

9. A method as claimed in claim 1 or claim 2, further comprising, prior to the table interpretation step, detecting the presence or absence of an insufficient entry in the table, and merging, in response to detecting the presence of an insufficient entry, the table and another table into a single table to supplement the insufficient entry.

10. A system for performing the method claimed in any preceding claim.

12

# FIG. 1

```
BEGIN
    READ ALL ENTERED LINES
            CALL readline
    CLASSIFY
        IF
            READING IS COMPLETE NORMALLY
        THEN
            CLASSIFY AND DISPLAY
                SEQ
                    CLASSIFY
                    CALL sort
                    DISPLAY THE. RESULT
                    CALL writeline
                SEQEND
        ELSE
            DISPLAY ERROR MESSAGE
        ENDIF
END
```

FIG. 2

start — READ ALL ENTERED LINES — (readline)

. CLASSIFY

READING IS COMPLETE NORMALLY

CLASSIFY AND DISPLAY

CLASSIFY — (sort)

DISPLAY THE RESULT — (writeline)

DISPLAY ERROR MESSAGE

return

# FIG. 3

EP 0 501 753 A2

# FIG. 4

LEVEL 0

LEVEL 1

LEVEL 2

LEVEL 3

# FIG. 6

LEVEL 0

LEVEL 1

LEVEL 2

LEVEL 3

# FIG. 5

| LEVEL | NAME | ATTRIBUTE | | |
| | | MINIMUM | MAXIMUM | · · · |
|---|---|---|---|---|
| 0 | A | 1 | 1 | · · · |
| 1 | B | 1 | 1 | · · · |
| 1 | C | 1 | 1 | · · · |
| 1 | D | 1 | 1 | · · · |
| 2 | F | 1 | 1 | · · · |
| 2 | G | 1 | 1 | · · · |
| 3 | J | 1 | 1 | · · · |
| 1 | E | 1 | 1 | · · · |
| 2 | H | 1 | 1 | · · · |
| 2 | I | 1 | 1 | · · · |

# FIG. 7

| LEVEL | NAME | ATTRIBUTE | | |
| --- | --- | --- | --- | --- |
| | | MINIMUM | MAXIMUM | · · · |
| 0 | D | 1 | 1 | · · · |
| 1 | F | 1 | 1 | · · · |
| 1 | G | 1 | 1 | · · · |
| 2 | J | 1 | 1 | · · · |

# FIG. 8

| LEVEL | NAME | ATTRIBUTE | | |
| --- | --- | --- | --- | --- |
| | | MINIMUM | MAXIMUM | ... |
| 0 | A | 1 | 1 | ... |
| 1 | B | 1 | 1 | ... |
| 1 | C | 1 | 1 | ... |
| 1 | D | | | |
| 1 | E | 1 | 1 | ... |
| 2 | H | 1 | 1 | ... |
| 2 | I | 1 | 1 | ... |

# FIG.9

| NEST | OBJECT NAME | MANDATORY | CONSTRUCTION | | | | F.S. |
|---|---|---|---|---|---|---|---|
| | | | ARRANGE-MENT | MINIMUM | MAXIMUM | SUCCESSOR'S NAME | |
| 0 | Paper | | | | | | |
| 1 | Title | Y | | | | | |
| | | | | | | | |

# FIG. 10

# FIG. 11

| NEST | OBJECT NAME | MANDATORY | CONSTRUCTION | | | | F.S. |
| | | | ARRANGE-MENT | MINIMUM | MAXIMUM | SUCCESSOR'S NAME | |
|---|---|---|---|---|---|---|---|
| 0 | Paper | | V | 1 | 1 | | |
| 1 | Title | Y | V | 1 | 3 | Ch_String | |
| 1 | Author | Y | V | 1 | 2 | Ch_String | BB |
| 1 | Body | Y | H | 2 | 2 | | AB |
| 2 | | Y | V | 1 | 50 | Ch_String | |

EP 0 501 753 A2

## FIG.12

| NEST | OBJECT NAME | MANDATORY | CONSTRUCTION | | | | F.S. |
|---|---|---|---|---|---|---|---|
| | | | ARRANGEMENT | MINIMUM | MAXIMUM | SUCCESSOR'S NAME | |
| 0 | Paper | | V | 1 | 1 | | |
| 1 | Title | Y | V | 1 | 3 | Ch_String | |
| 1 | Author | Y | V | 1 | 2 | Ch_String | BB |
| 1 | Body | Y | | | | | AB |

| 0 | Body | Y | H | 2 | 2 | | |
|---|---|---|---|---|---|---|---|
| 1 | | | V | 1 | 50 | Ch_String | |

FIG. 13    FIRST GenTree CALL

O Paper

FIG. 14    SECOND GenTree CALL

FIG. 15    THIRD GenTree CALL

FIG. 16    FOURTH GenTree CALL

Paper

Title  Author  Body

FIG. 17    FIFTH GenTree CALL

Paper

Title  Author  Body

WITHOUT NAME

# FIG. 18

TO TITLE NODE

TO AUTHOR NODE

TO BODY NODE

# FIG. 19

ADDRESS FOR TITLE NODE

ADDRESS FOR AUTHOR NODE

ADDRESS FOR BODY NODE

# FIG. 20